(19) Europäisches Patentamt
European Patent Office
Office européen des brevets

(11) **EP 3 425 418 B1**

(12) **EUROPEAN PATENT SPECIFICATION**

(45) Date of publication and mention
of the grant of the patent:
**03.06.2020 Bulletin 2020/23**

(51) Int Cl.:
**G01S 5/02** *(2010.01)* **H04B 17/318** *(2015.01)*
**H04L 25/02** *(2006.01)* **H04B 17/391** *(2015.01)*

(21) Application number: **17305872.8**

(22) Date of filing: **06.07.2017**

(54) **METHOD AND APPARATUS FOR DISTINGHUISHING LINE OF SIGHT FROM NON LINE OF SIGHT IN VEHICULAR COMMUNICATION SYSTEMS**

VERFAHREN UND VORRICHTUNG ZUR UNTERSCHEIDUNG DER SICHTLINIE VON DER NICHT-SICHTLINIE IN FAHRZEUGKOMMUNIKATIONSSYSTEMEN

PROCÉDÉ ET APPAREIL DE DISTINCTION D'UNE LIGNE DE VISÉE À PARTIR D'UNE NON LIGNE DE VISÉE DANS DES SYSTÈMES DE COMMUNICATION DE VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.01.2019 Bulletin 2019/02**

(73) Proprietors:
• **Mitsubishi Electric R&D Centre Europe B.V.**
**1119 NS Schiphol Rijk Amsterdam (NL)**
Designated Contracting States:
**FR**
• **Mitsubishi Electric Corporation**
**Tokyo 100-8310 (JP)**
Designated Contracting States:
**AL AT BE BG CH CY CZ DE DK EE ES FI GB GR HR HU IE IS IT LI LT LU LV MC MK MT NL NO PL PT RO RS SE SI SK SM TR**

(72) Inventors:
• **BOUTTIER, Arnaud**
**35708 RENNES Cedex 7 (FR)**
• **VERCASSON, Guillaume**
**35708 RENNES Cedex 7 (FR)**
• **NOURISSON, Xavier**
**35708 RENNES Cedex 7 (FR)**

(74) Representative: **Plasseraud IP**
**66, rue de la Chaussée d'Antin**
**75440 Paris Cedex 09 (FR)**

(56) References cited:
• **JADVA R ET AL: "First arrival detection for positioning in mobile channels", PERSONAL, INDOOR AND MOBILE RADIO COMMUNICATIONS, 2002. THE 13TH IEEE INTERNATIONAL SYMPOSIUM ON SEPT. 15-18, 2002, PISCATAWAY, NJ, USA,IEEE, vol. 4, 15 September 2002 (2002-09-15), pages 1540-1544, XP010611524, ISBN: 978-0-7803-7589-5**
• **Ridha Hamila ET AL: "A Highly Efficient Generalized Teager-Kaiser-Based Technique for LOS Estimation in WCDMA Mobile Positioning", EURASIP Journal on Advances in Signal Processing, 1 January 2005 (2005-01-01), pages 1-11, XP055440213, Cham DOI: 10.1155/ASP.2005.698 Retrieved from the Internet: URL:http://spcom.upc.edu/documents/rene_is t2002.pdf**
• **BORRAS J ET AL: "Decision theoretic framework for NLOS identification", VEHICULAR TECHNOLOGY CONFERENCE, 1998. VTC 98. 48TH IEEE OTTAWA, ONT., CANADA 18-21 MAY 1998, NEW YORK, NY, USA,IEEE, US, vol. 2, 18 May 1998 (1998-05-18), pages 1583-1587, XP010287994, DOI: 10.1109/VETEC.1998.686556 ISBN: 978-0-7803-4320-7**

**Description**

Field of the Invention

This invention relates to an apparatus and a method of identifying line of sight, LOS, and non-line of sight, NLOS, conditions in a multipath channel of a vehicular communication system. Similar methods and apparatuses are know from E. R. Jativa and J. Vidal, "First arrival detection for positioning in mobile channels," in Proceedings of 13th IEEE International Symposium on Personal, Indoor and Mobile Radio Communications (PIMRC '02), vol. 4, pp. 1540-1544, Lisbon, Portugal, September 2002; Ridha Hamila, Abdelmonaem Lakhzouri. A Highly Efficient Generalized Teager-Kaiser-Based Technique for LOS Estimation in WCDMA Mobile Positioning, EURASIP Journal on Advances in Signal Processing, 2005, 685032, DOI: 10.1155/ASP.2005.698; and J. Borras, P. Hatrack, and N. B. Mandayam, "Decision theoretic framework for NLOS identification," Proc. IEEE 48th Vehicular Technology Conf. (VTC'98 Spring), vol. 2, Ottawa, Canada, pp. 1583-1587, 18-21 May, 1998.

Background of the Invention

Location-aware wireless applications are in need of accurate localization methods. A typical application is the localization of a vehicle from one or several base stations in a vehicular cooperative communication networks such a Vehicle-to-everything (V2X) communication systems.

One challenge for localization system is to successfully mitigate non-line of sight (NLOS) effects by identifying whether the channel is a line of sight (LOS) channel or a NLOS channel. Indeed, the delay estimation error caused by a NLOS channel is the most serious one of those factors that affects the estimation accuracy of localization. The LOS channel can be understood as a transmitter in line of sight with a receiver while a NLOS channel can be understood as a transmitter in non-line of sight with a receiver.

In vehicular communication systems, known localization methods use triangulation techniques which are based on measurements of received signal strengths (RSS), time of arrival (ToA), time difference of arrival (TDoA) or more generally angles of arrival (AoA) between two or more nodes. However, it has been shown that NLOS propagation increases RSS, ToA and TDoA measurements errors and thus generates large localization error. To avoid the impact of NLOS on localization performance, a node should identify NLOS channel conditions.

Therefore, there is a need for discriminating between LOS and NLOS channel conditions to improve localization accuracy.

Summary of the Invention

The present invention provides an apparatus and a method of identifying line of sight, LOS, and non-line of sight, NLOS, conditions in a multipath channel of a vehicular communication system, as described in the accompanying claims. Specific embodiments of the invention are set forth in the dependent claims. These and other aspects of the invention will be apparent from an elucidated with reference to the embodiments described hereinafter.

Brief Description of the Drawings

Further details, aspects and embodiments of the proposed solution will be described, by way of example only, with reference to the drawings. In the drawings, like or similar reference numbers are used to identify like or functionally similar elements. Elements in the figures are illustrated for simplicity and clarity and have not necessarily been drawn to scale.

FIG. 1 is an exemplary vehicular communication system.
FIG. 2 is a block diagram illustrating an apparatus in accordance with embodiments of the subject application.
FIG. 3 is a diagram of an exemplary channel impulse response estimate.
FIG. 4 is a diagram of an exemplary best-fit curve.
FIG. 5 is a flow chart of a method in accordance with an embodiment of the subject application.

Detailed Description of the preferred embodiments

The general context of the invention is the detection of the line of sight (LOS) and non-line of sight (NLOS) conditions of the radio channel between two nodes of a vehicular communication system, where one node receives at random times radio packets transmitted by another node. Further, it is needed to perform the detection solely using the received radio signal without having any prior knowledge on the surrounding environment.

It is proposed to equip the receiving node with a dual antenna receiver. Then the proposed solution uses the first cluster of multipath components of channel estimates measured on the two antennas to derive the LOS/NLOS channel conditions based on hypothesis testing.

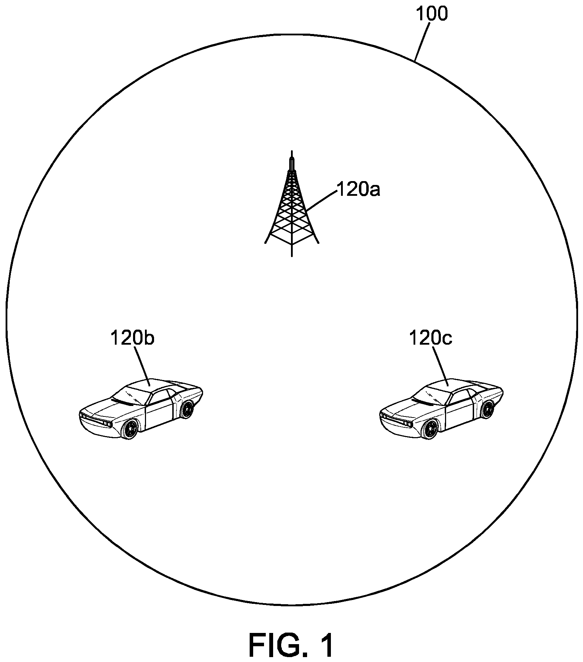

**Figure 1** shows an exemplary vehicular communication system **100**. Vehicular communication system **100** may be a Vehicular Ad Hoc Network (VANET) or a Vehicle-to-everything communication network (V2X). Vehicular communication system **100** comprises a plurality of nodes such as base station **120a** and vehicles **120b** and **120c.** Nodes **120a, 120b** and **120c** are configured to be in relative motion with respect to each other. In an example, node **120a** has a fixed position while nodes **120b** and **120c** are in motion with respect to node **120a.** In another example, nodes **120b** and **120c** are in relative motion with respect to each other. In yet another example, nodes **120a** and **120b** have a fixed position while node **120c** is in motion.

Further in **figure 1,** each of nodes **120a, 120b** and **120c** can operate either as a transmitting node or as a receiving node. In the following description, node **120b** is considered as a transmitting node and comprises a transmitter while node **120c** is considered as a receiving node and comprises a receiver. However, other configurations are allowed without departing from the scope of the invention. For example, node **120c** may be considered as a transmitting node and node **120a** may be considered as a receiving node. In the example of **figure 1,** transmitting node **120b** is configured to transmit a plurality of non-periodic signals. Receiving node **120c** is configured to receive the plurality of non-periodic signals. One should understand that a non-periodic signal is a signal that cannot be divided into fixed time periods of the same duration. Non-periodic signals are usually referred to as asynchronous or non-slotted signals.

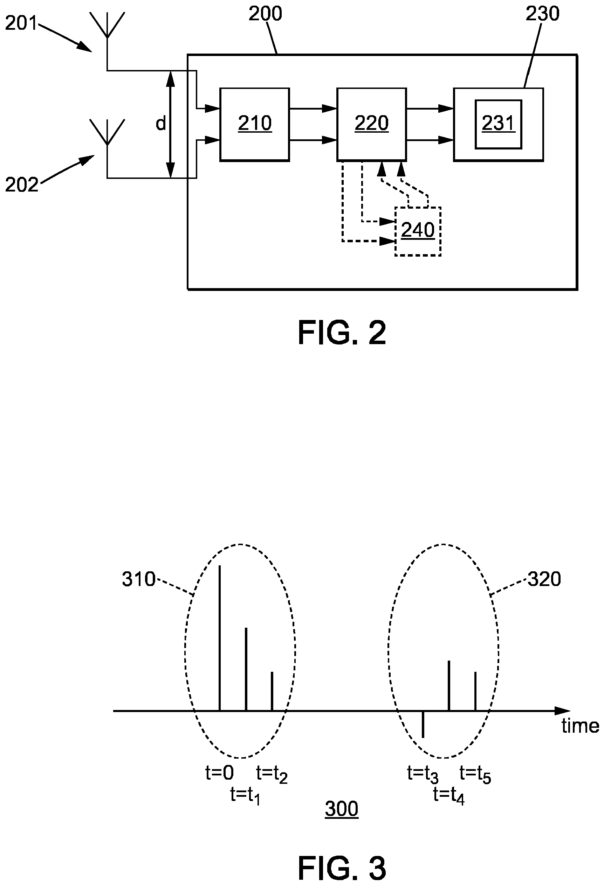

**Figure 2** illustrates an apparatus **200** for identifying line of sight (LOS) and non-line of sight (NLOS) conditions in a multipath channel of vehicular communication system **100**. Apparatus **200** may be included in a receiver (not shown) of receiving node **120c.** In **figure 2,** apparatus **200** comprises an array of antennas. The array of antennas comprises a first antenna **201** and a second antenna **202** which are separated by a separation distance d and configured to be mutually synchronized. In an example, first antenna **201** and second antenna **202** are installed with fixed relative position and are so separated to maintain independent channels. In an embodiment, first antenna **201** and second antenna **202** are separated by more than half a wavelength. Further, the receiver operating on first antenna **201** and second antenna **202** shares the same local oscillator (not shown). Therefore, first antenna **201** and second antenna **202** are said to be synchronized. Moreover, gain and at least frequency synchronization operations are jointly performed on the signals received at first and second antennas **201, 202.**

Further in **figure 2,** apparatus **200** comprises at least, a channel estimator **210,** a channel processor **220** and a statistical hypothesis test unit **230** which are operably coupled together.

Channel estimator **210** is configured for estimating, at each of the plurality of time points, first and second channel estimates respectively associated with each non-periodic signal received on first and second antennas **201, 202.** Each of the first and second channel estimates comprises multipath components arranged in clusters. It is assumed that the channel estimates are sampled at a rate slower than the inverse of the channel coherence time in order to obtain uncorrelated Gaussian samples. It is further considered that the propagation environment around receiving node **120c** can be described as a multipath environment where power is received through diffractions and reflections from objects in the surroundings. In that case, it is known that receiving node **120c** may receive multipath components, that is, multiple instances of the same signal at different times, i.e. with different delays, because different portions of the signal are reflected from various objects, such as buildings, moving vehicles or landscape details. In the following description, multipath components with approximately the same directions and delays are considered as clusters. Therefore, each of the clusters corresponds to the signal received from one scatterer. **Figure 3** shows an exemplary channel impulse response estimate **300** comprising two clusters **310, 320** of multipath components.

In the example of **figure 2,** channel processor **220** is configured for identifying a cluster in each of the first and second channel estimates, wherein said identified cluster is received earlier in time than the remaining clusters. In the following description, said identified cluster would be considered as the "first" cluster. In an embodiment, channel processor **220** estimates a time of arrival of the clusters for determining the first cluster.

Further, channel processor **220** is also configured for generating a complex representation of each of the identified clusters, thereby generating first and second complex signals. The complex representation comprises a complex amplitude component and one or more complex phase components. In an example, channel processor **220** comprises a conventional quadrature detector (not shown)). The conventional quadrature detector is operably coupled to each of first and second antennas **201, 202** and forms respective complex numbers from the signals received at first and second antennas **201, 202.** A real part of each complex number shows the in-phase components of the channel while an imaginary part of each complex number shows the quadrature components of the channel. The conventional quadrature detector also determines the phase components of the signals received at each of first and second antennas **201, 202.** Finally, channel processor **220** generates the first and second complex signals based on the complex numbers and the phase components.

It has been shown that if the number of scatterers of a multipath channel is large enough, the amplitude of the first cluster can be modelled as a zero mean circularly-symmetric random complex Gaussian process irrespective of the

EP 3 425 418 B1

distribution of the individual multipath components. It has been further shown that when the multipath channel also includes a component path which is stronger than the other paths, said dominant path being usually known as the LOS component or the deterministic component of the Rice model, the amplitude of the first cluster can be modelled as a circularly-symmetric random complex Gaussian process with an complex mean of $A \times e^{-j\gamma}$ where A is a real number and $\gamma$ exhibits the complex character of A.

In an example, based on the foregoing, the first and second complex signals associated with the first clusters can be mathematically represented according to following relation (1):

$$\begin{cases} x_{rx1} = A \times e^{-j\gamma} \times e^{-j\varphi} + b_{rx1} \\ x_{rx2} = A \times e^{-j\gamma} \times e^{-j\varphi} \times e^{-j\pi \times \frac{d}{\lambda} \times \cos\theta} + b_{rx2} \end{cases}$$

where $x_{rx1}$ is the first complex signal, $x_{rx2}$ is the second complex signal, $\varphi$ is a random phase component which has been found to be present on first and second antennas **201, 202**, $\theta$ is a bisector angle of arrival of the received signal on the array of antennas **201, 202** at a perpendicular bisector of a straight line connecting first and second antennas 201, 202, $d$ is a separation distance between first and second antennas **201, 202**, $\lambda$ is a wavelength of vehicular communication system **100**, $b_{rx1}$ is a noise component present on first antenna **201**, $b_{rx2}$ is a noise component present on the second antenna. One should note that the noise components $b_{rx1}$ and $b_{rx2}$ may comprise Rayleigh noise components of the cluster amplitude and/or Gaussian noise components resulting from the noisy estimate of the channel response.

As can be noticed from relation (1), the first cluster complex amplitude is affected by a random phase $\varphi$ mainly resulting from the Doppler shift and the frequency synchronization errors due to the non-periodic nature of the received signals. Further, it is also noted that the random phase $\varphi$ is present on both first and second complex signals. Therefore, one can take advantage of the foregoing and get rid of the random phase $\varphi$.

Returning back to **figure 2,** channel processor **220** is configured for processing the first complex signal so as to remove phase components which are in common with phase components associated with the second complex signal, thereby creating a processed first complex signal.

In an embodiment, channel processor **220** creates the processed first complex signal according to following relation (2):

$$\bar{x}_{rx1} = x_{rx1} \times e^{-j \times arg(x_{rx2})}$$

where $\bar{x}_{rx1}$ is the processed first complex signal, $x_{rx1}$ is the first complex signal, $x_{rx2}$ is the second complex signal and $arg(\cdot)$ represents the complex argument of a given complex number.

In another embodiment, channel processor **220** processes the second complex signal so as to remove phase components which are in common with phase components associated with the first complex signal, thereby creating a processed second complex signal. Further, channel processor **220** creates the processed second complex signal according to following relation (3):

$$\bar{x}_{rx2} = x_{rx2} \times e^{-j \times arg(x_{rx1})}$$

where $\bar{x}_{rx2}$ is the processed second complex signal, $x_{rx1}$ is the first complex signal, $x_{rx2}$ is the second complex signal and $arg(\cdot)$ represents the complex argument of a given complex number.

In yet another embodiment, channel processor **220** processes the first and second complex signals so as to remove phase components which are in common in first and second complex signals, thereby creating a processed combined complex signal. Further, channel processor **220** creates the processed combined complex signal according to following relation (4):

$$\bar{x}_{rx} = \frac{1}{2} \times \left( x_{rx1} \times e^{-j \times arg(x_{rx2})} + x_{rx2}^* \times e^{j \times arg(x_{rx1})} \right)$$

where $\bar{x}_{rx}$ is the processed combined complex signal, $x_{rx1}$ is the first complex signal, $x_{rx2}^*$ is the complex conjugate of the second complex signal and $arg(\cdot)$ represents the complex argument of a given complex number.

Further, it has been noted that when the multipath channel is in NLOS conditions, the first cluster coefficients

4

correspond to a zero-mean complex Gaussian process while in LOS conditions, the first cluster coefficients correspond to a complex Gaussian process with a complex mean (see above, $A \times e^{j\gamma}$). Therefore, it has been concluded that the identification of LOS/NLOS channel conditions can be based on the detection of an unknown complex constant level in a Gaussian noise, that is, the fast fading and additive noise due to channel estimation.

It has been found that hypothesis testing could be used to perform that identification. In that case, the phenomenon that is tested is whether or not a transmitter and a receiver are in LOS conditions. The foregoing can be reformulated as two hypotheses:

- H0 = NLOS conditions hypothesis, and
- H1 = LOS conditions hypothesis.

Based on the foregoing, it is proposed to perform a hypothesis testing based on a coherent generalized likelihood ratio test, GRLT, algorithm that operates on the normalized mean of a set of observations.
Referring back to **figure 2,** statistical hypothesis test unit **230** is configured for applying a coherent GRLT algorithm to the processed complex signals (i.e., the processed first complex signal, the processed second complex signal and/or the processed combined complex signal) to identify LOS or NLOS conditions.
In an embodiment, statistical hypothesis test unit **230** applies the coherent GRLT algorithm according to following relation (5):

$$\frac{\left| \frac{1}{N} \times \sum_{k=0}^{N-1} x_k \right|^2}{\frac{1}{N} \times \sum_{k=0}^{N-1} |x_k|^2} \begin{array}{c} H0 \\ \lessgtr \\ H1 \end{array} \sigma$$

where $N$ is the number of received non-periodic signals, $x_k$ is the processed complex signals, $H0$ is the NLOS hypothesis, $H1$ is the LOS hypothesis and $\sigma$ is a predetermined threshold. In an example, the threshold value $\sigma$ is obtained from the determination of a receiver operating characteristic (ROC) curve, where the ROC curve is a plot of the probability of detection (Pd) vs. the probability of false alarm (Pfa) for a given signal-to-noise ratio (SNR). The probability of detection (Pd) is the probability of saying that "1" is true given that event "1" occurred. The probability of false alarm (Pfa) is the probability of saying that "1" is true given that the "0" event occurred. In the invention, for example, the "1" event indicates LOS conditions, and the "0" event indicates NLOS conditions. In another example, the "1" event indicates NLOS conditions, and the "0" event indicates LOS conditions.
The hypothesis criterion of relation (5) is defined to get rid of the random phase $\varphi$ component which varies from processed complex signals to processed complex signals over the considered measurement window. The idea is to average the first cluster amplitude in real and imaginary parts. In the complex plan, this could be illustrated as the superposition of vectors where each vector is defined by the real/imaginary amplitude of each processed complex signals. In that case, the numerator of the hypothesis criterion of relation (5) which takes the modulus of the amplitude mean of the processed complex signals, corresponds in the complex plan, to length of the superposition of said vectors. Further, it is assumed that the bisector angle of arrival $\theta$ is constant over the considered measurement window.
In another embodiment, statistical hypothesis test unit **230** comprises a memory unit **231** for storing the processed complex signals wherein memory unit **231** is configured to discard a predetermined number of processed complex signals after the applying of the GRLT algorithm. In an embodiment, memory unit **231** is a first-in-first-out (FIFO) memory which is configured to store a first predetermined number of processed complex signals at a time and discard a second predetermined number of processed complex signals before storing new processed complex signals. In an example, the first and second predetermined numbers have different values. For instance, the first predetermined number is equal to ten and the second predetermined number is equal to two. In that case, ever since two new processed complex signals are to be stored on memory unit **231,** then the two oldest previously stored processed complex signals are discarded from memory unit **231.** In another example, the first and second predetermined numbers have the same value. For instance, the first and second predetermined numbers are both equal to ten. In that case, ever since ten new processed complex signals are to be stored on memory unit **231,** then all the previously stored processed complex signals are discarded from memory unit **231.**
In the context of vehicular communications such as in vehicular communication system **100,** it often occurs that the bisector angle of arrival $\theta$ experienced on the antenna array **201, 202** varies in time according to the motion of at least one of nodes **120b** and **120c.** Hence, each received non-periodic signal may have different bisector angle of arrival $\theta$ as nodes **120b** and **120c** are configured to be in motion relatively to each other. This variation may have a dramatic impact on the performance of the coherent GRLT algorithm. Indeed, the numerator of coherent GRLT algorithm as shown in relation (5) defines a sum of complex amplitudes which may suffer from a varying phase due to a variation of the bisector angle of arrival $\theta$.

However, due to physical constraints, such as the angular speed of nodes **120b** and **120c** with reference to the speed being rather small, it has been shown that the bisector angle of arrival $\theta$ experienced on the array of antennas **201, 202** slowly changes in time over the measurement window (N samples), with typical duration of a few hundreds of milliseconds. It would be advantageous to compensate for the variation of the angle of arrival $\theta$ in the processed complex signals prior applying the GRLT algorithm.

A possible solution need to take into consideration that non-periodic signals are received by node **120c,** sporadically, at a plurality of time points. Therefore, it is proposed to perform a regression analysis on the processed complex signals and the plurality of time points to find a "best fit" regression curve describing the bisector angle of arrival $\theta$ variations of the processed complex signals as a function of the plurality of time points. It is recalled that regression analysis also known as curve fitting is a statistical technic used to determine the "best fit" line or curve for a series of data points. Finally, after obtaining the "best fit" line or curve associated with processed complex signals as a function of the plurality of time points, it is proposed to compensate for these variations by rectifying the processed complex signals based on the variation of the bisector angle of arrival $\theta$ obtained from applying the plurality of time points to "best fit" line or curve. In an example, the regression analysis is performed on the phase component extracted from the processed complex signals. In that example, the "best fit" line or curve is then applied to the plurality of time points so as to obtain the phase variation resulting from the variation of the bisector angle of arrival $\theta$. Then, the phase variation is used for compensating the phase component extracted from the processed complex signals. Finally, the compensated phase components are reintroduced into the processed complex signals before applying the GRLT algorithm. In another example, the regression analysis is performed separately on real and imaginary parts of the processed complex signals. Then, the phase to be used for compensating the original samples is estimated as the phase of the fitted pairs (I/Q) at the plurality of time points.

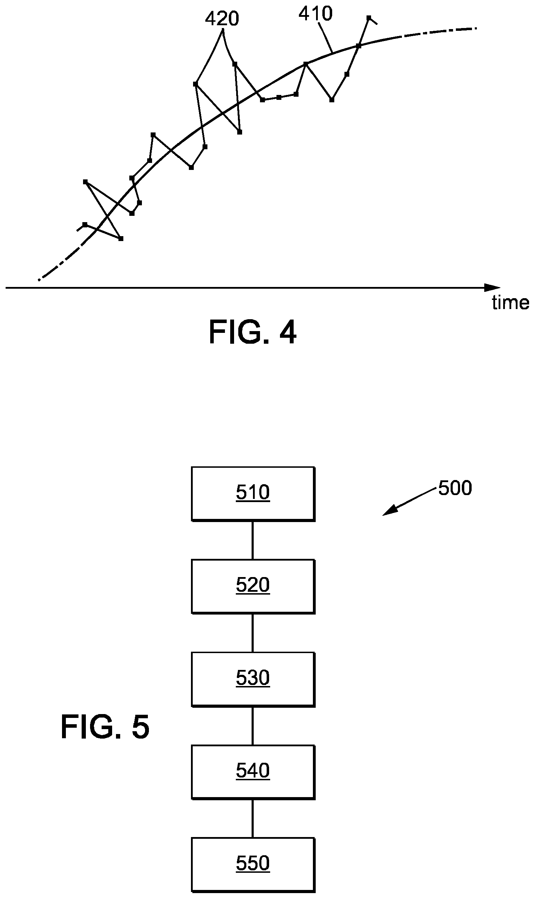

Referring again to **figure 2,** apparatus **200** further comprises a curve fitter **240.** Curve fitter **240** is configured for applying a curve fitting algorithm to the processed complex signals (i.e., the processed first complex signal, the processed second complex signal and/or the processed combined complex signal), thereby generating a best-fit curve defining a variation of the phase component of the processed complex signals over time. For example, one can consider conventional curve fitting algorithms such as those based on a least-squares algorithms, weighted least-squares algorithms, robust least-squares algorithms, non-linear least-squares algorithms and spline algorithms. **Figure 4** illustrates an exemplary best fit polynomial curve **410** obtained from on a plurality of processed complex signals **420.** Further, channel processor **220** is further configured for estimating phase compensated processed complex signals from the best-fit curve based on the plurality of time points. Finally, statistical hypothesis test unit **230** is further configured for applying the coherent GRLT algorithm to the phase compensated processed complex signals.

A receiver adapted for vehicular communication **100** and which includes apparatus **200** is also claimed.

Further, as shown in **figure 5,** embodiments of the proposed solution may also be implemented in a method **500** for identifying line of sight LOS and NLOS conditions in a multipath channel of vehicular communication **100** as already described above. Such method may include:

- at **S510,** estimating, at each of the plurality of time points, first and second channel estimates respectively associated with each non-periodic signal received on the first and second antennas, each of the first and second channel estimates having multipath components arranged in clusters,
- at **S520,** identifying a cluster of multipath components in each of the first and second channel estimates, wherein said identified cluster is received earlier in time than the remaining clusters,
- at **S530,** generating a complex representation of each of the identified clusters comprising a complex amplitude component and one or more complex phase components, thereby generating first and second complex signals,
- at **S540,** processing the first complex signal so as to remove phase components which are in common with phase components associated with the second complex signal, thereby creating a processed first complex signal,
- at **S550,** applying a coherent generalized likelihood ratio test, GRLT, algorithm to the processed complex signals to identify LOS or NLOS conditions

In embodiments of the method, the identifying comprises estimating a time of arrival of the clusters.

In one embodiment of the method, the processing comprises creating the processed first complex signal according to following relation,

$$\bar{x}_{rx1} = x_{rx1} \times e^{-j \times arg(x_{rx2})}$$

where $\bar{x}_{rx1}$ is the processed first complex signal, $x_{rx1}$ is the first complex signal and $x_{rx2}$ is the second complex signal.

In alternative embodiments of the method, the processing comprises:

- processing the second complex signal so as to remove phase components which are in common with phase components associated with the first complex signal, thereby creating a processed second complex signal, and
- creating the processed second complex signal according to following relation,

$$\bar{x}_{rx2} = x_{rx2} \times e^{-j \times arg(x_{rx1})}$$

where $\bar{x}_{rx2}$ is the processed second complex signal, $x_{rx1}$ is the first complex signal and $x_{rx2}$ is the second complex signal.

In another embodiment of the method, the processing comprises:

- processing first and second complex signals so as to remove phase components which are in common in first and second complex signals, thereby creating a processed combined complex signal, and
- creating the processed combined complex signal according to following relation,

$$\bar{x}_{rx} = \frac{1}{2} \times \left( x_{rx1} \times e^{-j \times arg(x_{rx2})} + x_{rx2}{}^* \times e^{j \times arg(x_{rx1})} \right)$$

where $\bar{x}_{rx}$ is the processed combined complex signal, $x_{rx1}$ is the first complex signal and $x_{rx2}{}^*$ is the complex conjugate of the second complex signal.

In embodiments of the method, the coherent GRLT algorithm is determined according to following relation,

$$\frac{\left| \frac{1}{N} \times \sum_{k=0}^{N-1} x_k \right|^2}{\frac{1}{N} \times \sum_{k=0}^{N-1} |x_k|^2} \underset{H1}{\overset{H0}{\lessgtr}} \sigma$$

where N is the number of received non-periodic signals, $x_k$ is the processed complex signal, $H0$ is the NLOS hypothesis, $H1$ is the LOS hypothesis and $\sigma$ is a predetermined threshold.

In other embodiments of the method, it is further included, discarding a predetermined number of processed complex signals after the applying of GRLT algorithm.

In one embodiment of the method, it is further included:

- applying a curve fitting algorithm to the processed complex signals, thereby generating a best-fit curve defining a variation of the phase component of the processed complex signals over time,
- estimating phase compensated processed complex signals from the best-fit curve based on the plurality of time points, and
- applying the coherent GRLT to the phase compensated processed complex signals.

The above-proposed method may also be performed by a computer program embodied in a non-transitory computer readable storage medium.

In the foregoing specification, the proposed solution has been described regarding specific examples of embodiments of the proposed solution. It will, however, be evident that various modifications and changes may be made therein without departing from the broader scope of the proposed solution as set forth in the appended claims.

## Claims

1. A receiver apparatus (200) for identifying line of sight, LOS, and non-line of sight, NLOS, conditions in a multipath channel of a vehicular communication system (100), the communication system comprising at least a transmitting node (120b) and a receiving node (120c), which are configured to be in relative motion with respect to each other, the receiver apparatus (200) included in a receiver of the receiver node (120c), the transmitting node being further configured to transmit a plurality of non-periodic signals at a plurality of time points, the receiver apparatus (200) comprising first and second antennas (201, 202) which are separated by a separation distance and configured to be mutually synchronized to a same oscillator and being configured to receive the plurality of non-periodic signals at the plurality of time points, the receiver apparatus (200) further comprising:

- a channel estimator *(210)* configured for estimating, at each of the plurality of time points, first and second channel estimates respectively associated with each non-periodic signal received on the first and second antennas, each of the first and second channel estimates having multipath components arranged in clusters, a cluster comprising multipath components with approximately the same directions and delays; and
- a channel processor *(220)* configured for:

- identifying a cluster of multipath components in each of the first and second channel estimates, wherein said identified cluster is received earlier in time than the remaining clusters,
- generating a complex representation of each of the identified clusters comprising a complex amplitude component and one or more complex phase components, thereby generating first and second complex signals,
- processing the first complex signal and/or the second complex signal so as to remove a phase component which is in common in the first and second complex signals, thereby creating a processed complex signal, the phase component resulting from the Doppler shift and the frequency synchronization errors due to the non-periodic nature of the received plurality of non-periodic signals,

- a statistical hypothesis test unit *(230)* for applying a coherent generalized likelihood ratio test, GRLT, algorithm to the processed complex signal to identify LOS or NLOS conditions.

**2.** The receiver apparatus of claim 1, wherein the channel processor is further configured for estimating a time of arrival of the clusters.

**3.** The receiver apparatus of claims 1 or 2, wherein the channel processor is further configured for creating the processed complex signal according to following relation,

$$\bar{x}_{rx1} = x_{rx1} \times e^{-j \times arg(x_{rx2})}$$

where $\bar{x}_{rx1}$ is the processed complex signal, $x_{rx1}$ is the first complex signal and $x_{rx2}$ is the second complex signal.

**4.** The receiver apparatus of claims 1 or 2, wherein the channel processor is further configured for creating the processed complex signal according to following relation,

$$\bar{x}_{rx2} = x_{rx2} \times e^{-j \times arg(x_{rx1})}$$

where $\bar{x}_{rx2}$ is the processed complex signal, $x_{rx1}$ is the first complex signal and $x_{rx2}$ is the second complex signal.

**5.** The receiver apparatus of claims 1 or 2, wherein the channel processor is further configured for creating the processed complex signal according to following relation,

$$\bar{x}_{rx} = \frac{1}{2} \times \left( x_{rx1} \times e^{-j \times arg(x_{rx2})} + x_{rx2}{}^{*} \times e^{j \times arg(x_{rx1})} \right)$$

where $\bar{x}_{rx}$ is the processed complex signal, $x_{rx1}$ is the first complex signal and $x_{rx2}{}^{*}$ is the complex conjugate of the second complex signal.

**6.** The receiver apparatus of claims 1, 2, 3, 4 or 5 wherein statistical hypothesis test unit is further configured to determine the coherent GRLT algorithm according to following relation,

$$\frac{\left|\frac{1}{N} \times \sum_{k=0}^{N-1} x_k\right|^2}{\frac{1}{N} \times \sum_{k=0}^{N-1} |x_k|^2} \underset{H1}{\overset{H0}{\lessgtr}} \sigma$$

where $N$ is the number of received non-periodic signals, $x_k$ is the processed complex signal, $H0$ is the NLOS hypothesis, $H1$ is the LOS hypothesis and $\sigma$ is a predetermined threshold.

7. The receiver apparatus of claim 6 wherein the statistical hypothesis test unit comprises a memory unit *(231)* for storing the processed complex signals wherein the memory unit is configured to discard a predetermined number of processed complex signals after the applying of the GRLT algorithm.

8. The receiver apparatus of claims 1, 2, 3, 4, 5, 6 and 7 further comprising a curve fitter *(240)* for applying a curve fitting algorithm to the processed complex signals, thereby generating a best-fit curve defining a variation of the phase component of the processed complex signals over time, wherein,

- the channel processor being further configured for estimating phase compensated processed complex signals from the best-fit curve based on the plurality of time points, and
- the statistical hypothesis test unit being further configured for applying the coherent GRLT to the phase compensated processed complex signals.

9. A method *(500)*, carried out by a receiver apparatus (200), the method being configured for identifying line of sight, LOS, and non-line of sight, NLOS, conditions in a multipath channel of a vehicular communication system *(100),* the communication system comprising at least a transmitting node *(120b)* and a receiving node (120c), which are configured to be in relative motion with respect to each other, ther receiver apparatus (200) included in a receiver of the receiver node (120c), the transmitting node being further configured to transmit a plurality of non-periodic signals at a plurality of time points, the receiver apparatus (200) comprising first and second antennas (201, 202) which are separated by a separation distance and configured to be mutually synchronized to a same oscillator and being configured to receive the plurality of non-periodic signals at the plurality of time points, the method comprising:

- estimating *(510),* at each of the plurality of time points, first and second channel estimates respectively associated with each non-periodic signal received on the first and second antennas, each of the first and second channel estimates having multipath components arranged in clusters, a cluster comprising multipath components with approximately the same directions and delays,
- identifying *(520)* a cluster of multipath components in each of the first and second channel estimates, wherein said identified cluster is received earlier in time than the remaining clusters,
- generating *(530)* a complex representation of each of the identified clusters comprising a complex amplitude component and one or more complex phase components, thereby generating first and second complex signals,
- processing *(540)* the first complex signal and/or the second complex signal so as to remove a phase component which is in common in the first and second complex signals, thereby creating a processed complex signal, the phase component resulting from the Doppler shift and the frequency synchronization errors due to the non-periodic nature of the received plurality of non-periodic signals,
- applying *(550)* a coherent generalized likelihood ratio test, GRLT, algorithm to the processed complex signal to identify LOS or NLOS conditions.

10. The method of claim 9, wherein the identifying comprises estimating a time of arrival of the clusters.

11. The method of claims 9 or 10, wherein the processing comprises creating the processed complex signal according to following relation,

$$\bar{x}_{rx1} = x_{rx1} \times e^{-j \times arg(x_{rx2})}$$

where $\bar{x}_{rx1}$ is the processed complex signal, $x_{rx1}$ is the first complex signal and $x_{rx2}$ is the second complex signal.

12. The method of claims 9 or 10, wherein the processing comprises creating the processed complex signal according

to following relation,

$$\bar{x}_{rx2} = x_{rx2} \times e^{-j \times arg(x_{rx1})}$$

where $\bar{x}_{rx2}$ is the processed complex signal, $x_{rx1}$ is the first complex signal and $x_{rx2}$ is the second complex signal.

13. The method of claims 9 or 10, wherein the processing comprises creating the processed complex signal according to following relation,

$$\bar{x}_{rx} = \frac{1}{2} \times \left( x_{rx1} \times e^{-j \times arg(x_{rx2})} + x_{rx2}^{*} \times e^{j \times arg(x_{rx1})} \right)$$

where $\bar{x}_{rx}$ is the processed complex signal, $x_{rx1}$ is the first complex signal and $x_{rx2}^{*}$ is the complex conjugate of the second complex signal.

14. The method of claims 9, 10, 11, 12 or 13 wherein the coherent GRLT algorithm is determined according to following relation,

$$\frac{\left| \frac{1}{N} \times \sum_{k=0}^{N-1} x_k \right|^2}{\frac{1}{N} \times \sum_{k=0}^{N-1} |x_k|^2} \underset{H1}{\overset{H0}{\lessgtr}} \sigma$$

where $N$ is the number of received non-periodic signals, $x_k$ is the processed complex signal, $H0$ is the NLOS hypothesis, $H1$ is the LOS hypothesis and $\sigma$ is a predetermined threshold.

15. The method of claim 14 further comprising discarding a predetermined number of processed complex signals after the applying of GRLT algorithm.

16. The method of claims 9, 10, 11, 12, 13, 14 and 15 further comprising:

- applying a curve fitting algorithm to the processed complex signals, thereby generating a best-fit curve defining a variation of the phase component of the processed complex signals over time,
- estimating phase compensated processed complex signals from the best-fit curve based on the plurality of time points, and
- applying the coherent GRLT to the phase compensated processed complex signals.

**Patentansprüche**

1. Empfänger-Vorrichtung (200) zum Identifizieren von Sichtlinie, LOS, und Nicht-Sichtlinie, NLOS, Zuständen in einem Mehrweg-Kanal eines Fahrzeug-Kommunikationssystems (100), wobei das Kommunikationssystem wenigstens einen übertragenden Knoten (120b) und einen empfangenden Knoten (120c) umfasst, welche dazu eingerichtet sind, in einer relativen Bewegung in Bezug aufeinander zu sein, wobei die Empfänger-Vorrichtung (200) in einem Empfänger des Empfänger-Knotens (120c) umfasst ist, wobei der übertragende Knoten ferner dazu eingerichtet ist, eine Mehrzahl von nicht-periodischen Signalen zu einer Mehrzahl von Zeitpunkten zu übertragen, wobei die Empfänger-Vorrichtung (200) erste und zweite Antennen (201, 202) umfasst, welche durch eine Trennung-Distanz getrennt sind und dazu eingerichtet sind, wechselseitig zu einem gleichen Oszillator synchronisiert zu sein und dazu eingerichtet sind, die Mehrzahl von nicht-periodischen Signalen zu der Mehrzahl von Zeitpunkten zu empfangen, wobei die Empfänger-Vorrichtung (200) ferner umfasst:

- eine Kanal-Schätzeinheit (210), welche zum Schätzen von ersten und zweiten Kanal-Schätzungen bei jedem aus der Mehrzahl von Zeitpunkten eingerichtet ist, welche jeweils jedem nicht-periodischen Signal zugeordnet sind, welches an den ersten und zweiten Antennen empfangen wird, wobei jede aus den ersten und zweiten Kanal-Schätzungen Mehrweg-Komponenten aufweist, welche in Clustern angeordnet sind, wobei ein Cluster Mehrweg-Komponenten mit etwa den gleichen Richtungen und Verzögerungen umfasst; und
- einen Kanal-Prozessor (220), welcher dazu eingerichtet ist:
- einen Cluster von Mehrweg-Komponenten in jeder aus den ersten und zweiten Kanal-Schätzungen zu identifizieren, wobei der identifizierte Cluster in einer Zeit früher empfangen wird als die verbleibenden Cluster,
- eine Komplex-Darstellung von jedem der identifizierten Cluster zu erzeugen, umfassend eine Komplex-Amplitude-Komponente und eine oder mehrere Komplex-Phase-Komponenten, wodurch erste und zweite Komplex-Signale erzeugt werden,
- das erste Komplex-Signal und/oder das zweite Komplex-Signal zu verarbeiten, um eine Phase-Komponente zu entfernen, welche in den ersten und zweiten Komplex-Signalen gemeinsam ist, wodurch ein verarbeitetes Komplex-Signal erzeugt wird, wobei die Phase-Komponente aus dem Doppler-Schift und den Frequenz-Synchronisation-Fehlern auf Grund der nicht-periodischen Natur der empfangenen Mehrzahl von nicht-periodischen Signalen resultiert,
- eine statistische Hypothese-Test-Einheit (230) zum Anwenden eines kohärenten generalisierten Wahrscheinlichkeit-Verhältnis-Test, GRLT, Algorithmus auf das verarbeitete Komplex-Signal, um LOS- oder NLOS-Zustände zu identifizieren.

2. Empfänger-Vorrichtung nach Anspruch 1, wobei der Kanal-Prozessor ferner zum Schätzen einer Ankunftszeit der Cluster eingerichtet ist.

3. Empfänger-Vorrichtung nach Ansprüchen 1 oder 2, wobei der Kanal-Prozessor ferner zum Erzeugen des verarbeiteten Komplex-Signals gemäß der folgenden Beziehung eingerichtet ist,

$$\bar{x}_{rx1} = x_{rx1} \times e^{-j \times arg(x_{rx2})}$$

wobei $\bar{x}_{rx1}$ das verarbeitete Komplex-Signal ist, $x_{rx1}$ das erste Komplex-Signal ist und $x_{rx2}$ das zweite Komplex-Signal ist.

4. Empfänger-Vorrichtung nach Ansprüchen 1 oder 2, wobei der Kanal-Prozessor ferner zum Erzeugen des verarbeiteten Komplex-Signals gemäß der folgenden Beziehung eingerichtet ist,

$$\bar{x}_{rx2} = x_{rx2} \times e^{-j \times arg(x_{rx1})}$$

wobei $\bar{x}_{rx2}$ das verarbeitete Komplex-Signal ist, $x_{rx1}$ das erste Komplex-Signal ist und $x_{rx2}$ das zweite Komplex-Signal ist.

5. Empfänger-Vorrichtung nach Ansprüchen 1 oder 2, wobei der Kanal-Prozessor ferner zum Erzeugen des verarbeiteten Komplex-Signals gemäß der folgenden Beziehung eingerichtet ist,

$$\bar{x}_{rx} = \frac{1}{2} \times \left( x_{rx1} \times e^{-j \times arg(x_{rx2})} + x_{rx2}{}^{*} \times e^{j \times arg(x_{rx1})} \right)$$

wobei $\bar{x}_{rx}$ das verarbeitete Komplex-Signal ist, $x_{rx1}$ das erste Komplex-Signal ist und $x_{rx2}{}^{*}$ das Komplex-Konjugat des zweiten Komplex-Signals ist.

6. Empfänger-Vorrichtung nach Ansprüchen 1, 2, 3, 4 oder 5, wobei eine statische Hypothese-Test-Einheit ferner dazu eingerichtet ist, den kohärenten GRLT-Algorithmus gemäß der folgenden Beziehung zu bestimmen,

$$\frac{\left| \frac{1}{N} \times \sum_{k=0}^{N-1} x_k \right|^2}{\frac{1}{N} \times \sum_{k=0}^{N-1} |x_k|^2} \begin{array}{c} H0 \\ \lessgtr \\ H1 \end{array} \sigma$$

wobei *N* die Anzahl von empfangenen nicht-periodischen Signalen ist, $x_k$ das verarbeitete Komplex-Signal ist, *H*0 die NLOS-Hypothese ist, *H*1 die LOS-Hypothese ist und $\sigma$ ein vorbestimmter Schwellenwert ist.

7.  Empfänger-Vorrichtung nach Anspruch 6, wobei die statistische Hypothese-Test-Einheit eine Speichereinheit (231) zum Speichern der verarbeiteten Komplex-Signale umfasst, wobei die Speichereinheit dazu eingerichtet ist, eine vorbestimmte Anzahl von verarbeiteten Komplex-Signalen nach dem Anwenden des GRLT-Algorithmus zu verwerfen.

8.  Empfänger-Vorrichtung nach Ansprüchen 1, 2, 3, 4, 5, 6 und 7, ferner umfassend eine Kurven-Einpassungseinheit (240) zum Anwenden eines Kurven-Einpassung-Algorithmus auf die verarbeiteten Komplex-Signale, wodurch eine am besten passende Kurve erzeugt wird, welche eine Variation der Phase-Komponente der verarbeiteten Komplex-Signale über eine Zeit definiert,
    wobei,

    - der Kanal-Prozessor ferner zum Schätzen von Phasen-kompensierten verarbeiteten Komplex-Signalen von der am besten passenden Kurve auf Grundlage der Mehrzahl von Zeitpunkten eingerichtet ist, und
    - die statistische Hypothese-Test-Einheit ferner zum Anwenden des kohärenten GRLT auf die Phasen-kompensierten verarbeiteten Komplex-Signale eingerichtet ist.

9.  Verfahren (500), welches durch eine Empfänger-Vorrichtung (200) ausgeübt wird, wobei das Verfahren zum Identifizieren von Sichtlinie, LOS, und Nicht-Sichtlinie, NLOS, Zuständen in einem Mehrweg-Kanal eines Fahrzeug-Kommunikationssystems (100) eingerichtet ist, wobei das Kommunikationssystem wenigstens einen übertragenden Knoten (120b) und einen empfangenden Knoten (120c) umfasst, welche dazu eingerichtet sind, in einer relativen Bewegung in Bezug aufeinander zu sein, wobei die Empfänger-Vorrichtung (200) in einem Empfänger des Empfänger-Knotens (120c) umfasst ist, wobei der übertragende Knoten ferner dazu eingerichtet ist, eine Mehrzahl von nicht-periodischen Signalen zu einer Mehrzahl von Zeitpunkten zu übertragen, wobei die Empfänger-Vorrichtung (200) erste und zweite Antennen (201, 202) umfasst, welche durch eine Trennung-Distanz getrennt sind und dazu eingerichtet sind, wechselseitig zu einem gleichen Oszillator synchronisiert zu werden und dazu eingerichtet sind, die Mehrzahl von nicht-periodischen Signalen zu der Mehrzahl von Zeitpunkten zu empfangen, wobei das Verfahren umfasst:

    - Schätzen (510) von ersten und zweiten Kanal-Schätzungen bei jedem aus der Mehrzahl von Zeitpunkten, welche jeweils jedem nicht-periodischen Signal zugeordnet sind, welches an den ersten und zweiten Antennen empfangen wird, wobei jede aus den ersten und zweiten Kanal-Schätzungen Mehrweg-Komponenten aufweist, welche in Clustern angeordnet sind, wobei ein Cluster Mehrweg-Komponenten mit etwa den gleichen Richtungen und Verzögerungen umfasst; und
    - Identifizieren (520) eines Clusters von Mehrweg-Komponenten in jeder aus den ersten und zweiten Kanal-Schätzungen, wobei der identifizierte Cluster in einer Zeit früher empfangen wird als die verbleibenden Cluster,
    - Erzeugen (530) einer Komplex-Darstellung von jedem der identifizierten Cluster, umfassend eine Komplex-Amplitude-Komponente und eine oder mehrere Komplex-Phase-Komponenten, wodurch erste und zweite Komplex-Signale erzeugt werden,
    - Verarbeiten (540) des ersten Komplex-Signals und/oder des zweiten Komplex-Signals, um eine Phase-Komponente zu entfernen, welche in den ersten und zweiten Komplex-Signalen gemeinsam ist, wodurch ein verarbeitetes Komplex-Signal erzeugt wird, wobei die Phase-Komponente aus dem Doppler-Schift und den Frequenz-Synchronisation-Fehlern auf Grund der nicht-periodischen Natur der empfangenen Mehrzahl von nicht-periodischen Signalen resultiert,
    - Anwenden (550) eines kohärenten generalisierten Wahrscheinlichkeit-Verhältnis-Test, GRLT, Algorithmus auf das verarbeitete Komplex-Signal, um LOS- oder NLOS-Zustände zu identifizieren.

10. Verfahren nach Anspruch 9, wobei das Identifizieren ein Schätzen einer Ankunftszeit der Cluster umfasst.

11. Verfahren nach Ansprüchen 9 oder 10, wobei das Verarbeiten ein Erzeugen des verarbeiteten Komplex-Signals gemäß der folgenden Beziehung umfasst,

$$\bar{x}_{rx1} = x_{rx1} \times e^{-j \times arg(x_{rx2})}$$

wobei $\bar{x}_{rx1}$ das verarbeitete Komplex-Signal ist, $x_{rx1}$ das erste Komplex-Signal ist und $x_{rx2}$ das zweite Komplex-Signal ist.

12. Verfahren nach Ansprüchen 9 oder 10, wobei das Verarbeiten ein Erzeugen des verarbeiteten Komplex-Signals gemäß der folgenden Beziehung umfasst,

$$\bar{x}_{rx2} = x_{rx2} \times e^{-j \times arg(x_{rx1})}$$

wobei $\bar{x}_{rx2}$ das verarbeitete Komplex-Signal ist, $x_{rx1}$ das erste Komplex-Signal ist und $x_{rx2}$ das zweite Komplex-Signal ist.

13. Verfahren nach Ansprüchen 9 oder 10, wobei das Verarbeiten ein Erzeugen des verarbeiteten Komplex-Signals gemäß der folgenden Beziehung umfasst,

$$\bar{x}_{rx} = \frac{1}{2} \times \left( x_{rx1} \times e^{-j \times arg(x_{rx2})} + x_{rx2}{}^* \times e^{j \times arg(x_{rx1})} \right)$$

wobei $\bar{x}_{rx}$ das verarbeitete Komplex-Signal ist, $x_{rx1}$ das erste Komplex-Signal ist und $x_{rx2}{}^*$ das Komplex-Konjugat des zweiten Komplex-Signals ist.

14. Verfahren nach Ansprüchen 9, 10, 11, 12 oder 13, wobei der kohärente GRLT-Algorithmus gemäß der folgenden Beziehung bestimmt wird,

$$\frac{\left| \frac{1}{N} \times \sum_{k=0}^{N-1} x_k \right|^2}{\frac{1}{N} \times \sum_{k=0}^{N-1} |x_k|^2} \underset{H1}{\overset{H0}{\gtrless}} \sigma$$

wobei $N$ die Anzahl von empfangenen nicht-periodischen Signalen ist, $x_k$ das verarbeitete Komplex-Signal ist, $H0$ die NLOS-Hypothese ist, $H1$ die LOS-Hypothese ist und $\sigma$ ein vorbestimmter Schwellenwert ist.

15. Verfahren nach Anspruch 14, ferner umfassend ein Verwerfen einer vorbestimmten Anzahl von verarbeiteten Komplex-Signalen nach dem Anwenden des GRLT-Algorithmus.

16. Verfahren nach Ansprüchen 9, 10, 11, 12, 13, 14 und 15, ferner umfassend:

- Anwenden eines Kurven-Einpassung-Algorithmus auf die verarbeiteten Komplex-Signale, wodurch eine am besten passende Kurve erzeugt wird, welche eine Variation der Phase-Komponente der verarbeiteten Komplex-Signale über eine Zeit definiert,
- Schätzen von Phasen-kompensierten verarbeiteten Komplex-Signalen von der am besten passenden Kurve auf Grundlage der Mehrzahl von Zeitpunkten, und
- Anwenden des kohärenten GRLT auf die Phasen-kompensierten verarbeiteten Komplex-Signale.

**Revendications**

1. Appareil récepteur (200) pour l'identification de conditions de ligne de visée, LOS, et de non ligne de visée, NLOS, dans un canal multi-trajets d'un système de communication véhiculaire (100), le système de communication comprenant au moins un nœud émetteur (120b) et un nœud récepteur (120c), qui sont configurés pour être en mouvement relatif l'un par rapport à l'autre, l'appareil récepteur (200) étant inclus dans un récepteur du nœud récepteur (120c), le nœud émetteur étant en outre configuré pour transmettre une pluralité de signaux non périodique à une pluralité d'instants, l'appareil récepteur (200) comprenant des première et seconde antennes (201, 202) qui sont séparées d'une distance de séparation et configurées pour être mutuellement synchronisées à un même oscillateur et qui sont configurées pour recevoir la pluralité de signaux non périodique à la pluralité d'instants, l'appareil récepteur (200) comprenant en outre :

- un estimateur de canal (210) configuré pour estimer, à chacun de la pluralité d'instants, des première et seconde estimations de canal respectivement associées à chaque signal non périodique reçu sur les première et seconde antennes, chacune des première et seconde estimations de canal ayant des composantes multi-trajets agencées en groupements, un groupement comprenant des composantes multi-trajets avec approximativement les mêmes directions et retards ; et
- un processeur de canal (220) configuré pour :

  - l'identification d'un groupement de composantes multi-trajets dans chacune des première et seconde estimations de canal, dans lequel ledit groupement identifié est reçu plus tôt que les groupements restants,
  - la génération d'une représentation complexe de chacun des groupements identifiés comprenant une composante d'amplitude complexe et une ou plusieurs composantes de phase complexes, en générant de ce fait des premier et second signaux complexes,
  - le traitement du premier signal complexe et/ou du second signal complexe de manière à supprimer une composante de phase qui est commune aux premier et second signaux complexes, en créant de ce fait un signal complexe traité, la composante de phase découlant du décalage Doppler et des erreurs de synchronisation de fréquence dues à la nature non périodique de la pluralité de signaux non périodique reçus,
  - une unité de test d'hypothèse statistique (230) pour appliquer un algorithme de test de rapport de vraisemblance généralisé, GRLT, cohérent au signal complexe traité pour identifier des conditions LOS ou NLOS.

2. Appareil récepteur selon la revendication 1, dans lequel le processeur de canal est en outre configuré pour estimer un temps d'arrivée des groupements.

3. Appareil récepteur selon la revendication 1 ou 2, dans lequel le processeur de canal est en outre configuré pour créer le signal complexe traité selon la relation suivante :

$$\bar{x}_{rx1} = x_{rx1} \times e^{-j \times arg(x_{rx2})}$$

où $\bar{x}_{rx1}$ est le signal complexe traité, $x_{rx1}$ est le premier signal complexe et $x_{rx2}$ est le second signal complexe.

4. Appareil récepteur selon la revendication 1 ou 2, dans lequel le processeur de canal est en outre configuré pour créer le signal complexe traité selon la relation suivante :

$$\bar{x}_{rx2} = x_{rx2} \times e^{-j \times arg(x_{rx1})}$$

où $\bar{x}_{rx2}$ est le signal complexe traité, $x_{rx1}$ est le premier signal complexe et $x_{rx2}$ est le second signal complexe.

5. Appareil récepteur selon la revendication 1 ou 2, dans lequel le processeur de canal est en outre configuré pour créer le signal complexe traité selon la relation suivante :

$$\bar{x}_{rx} = \frac{1}{2} \times \left( x_{rx1} \times e^{-j \times arg(x_{rx2})} + x_{rx2}^* \times e^{j \times arg(x_{rx1})} \right)$$

où $\bar{x}_{rx}$ est le signal complexe traité, $x_{rx1}$ est le premier signal complexe et $x_{rx2}^*$ est la conjuguée complexe du second signal complexe.

6. Appareil récepteur selon la revendication 1, 2, 3, 4 ou 5, dans lequel l'unité de test d'hypothèse statistique est en outre configurée pour déterminer l'algorithme GRLT cohérent selon la relation suivante :

$$\frac{\left|\frac{1}{N} \times \sum_{k=0}^{N-1} x_k\right|^2}{\frac{1}{N} \times \sum_{k=0}^{N-1} |x_k|^2} \underset{H1}{\overset{H0}{\lessgtr}} \sigma$$

où N est le nombre de signaux non périodique reçus, $x_k$ est le signal complexe traité, H0 est l'hypothèse NLOS, H1 est l'hypothèse LOS et $\sigma$ est un seuil prédéterminé.

7. Appareil récepteur selon la revendication 6, dans lequel l'unité de test d'hypothèse statistique comprend une unité de mémoire (231) pour stocker les signaux complexes traités, dans lequel l'unité de mémoire est configurée pour rejeter un nombre prédéterminé de signaux complexes traités après l'application de l'algorithme GRLT.

8. Appareil récepteur selon les revendications 1, 2, 3, 4, 5, 6 et 7, comprenant en outre un ajusteur de courbe (240) pour appliquer un algorithme d'ajustement de courbe aux signaux complexes traités, en générant de ce fait une courbe d'ajustement optimal définissant une variation de la composante de phase des signaux complexes traités au fil du temps,
dans lequel,

   - le processeur de canal est en outre configuré pour estimer des signaux complexes traités à compensation de phase à partir de la courbe d'ajustement optimal sur la base de la pluralité d'instants, et
   - l'unité de test d'hypothèse statistique est en outre configurée pour appliquer le GRLT cohérent aux signaux complexes traités à compensation de phase.

9. Procédé (500), réalisé par un appareil récepteur (200), le procédé étant configuré pour l'identification de conditions de ligne de visée, LOS, et de non ligne de visée, NLOS, dans un canal multi-trajets d'un système de communication véhiculaire (100), le système de communication comprenant au moins un nœud émetteur (120b) et un nœud récepteur (120c), qui sont configurés pour être en mouvement relatif l'un par rapport à l'autre, l'appareil récepteur (200) étant inclus dans un récepteur du nœud récepteur (120c), le nœud émetteur étant en outre configuré pour transmettre une pluralité de signaux non périodique à une pluralité d'instants, l'appareil récepteur (200) comprenant des première et seconde antennes (201, 202) qui sont séparées d'une distance de séparation et configurées pour être mutuellement synchronisées à un même oscillateur et qui sont configurées pour recevoir la pluralité de signaux non périodique à la pluralité d'instants, le procédé comprenant :

   - l'estimation (510), à chacun de la pluralité d'instants, de première et seconde estimations de canal respectivement associées à chaque signal non périodique reçu sur les première et seconde antennes, chacune des première et seconde estimations de canal ayant des composantes multi-trajets agencées en groupements, un groupement comprenant des composantes multi-trajets avec approximativement les mêmes directions et retards,
   - l'identification (520) d'un groupement de composantes multi-trajets dans chacune des première et seconde estimations de canal, dans lequel ledit groupement identifié est reçu plus tôt que les groupements restants,
   - la génération (530) d'une représentation complexe de chacun des groupements identifiés comprenant une composante d'amplitude complexe et une ou plusieurs composantes de phase complexes, en générant de ce fait des premier et second signaux complexes,
   - le traitement (540) du premier signal complexe et/ou du second signal complexe de manière à supprimer une composante de phase qui est commune aux premier et second signaux complexes, en créant de ce fait un signal complexe traité, la composante de phase découlant du décalage Doppler et des erreurs de synchronisation de fréquence dues à la nature non périodique de la pluralité de signaux non périodique reçus,
   - l'application (550) d'un algorithme de test de rapport de vraisemblance généralisé, GRLT, cohérent au signal complexe traité pour identifier des conditions LOS ou NLOS.

10. Procédé selon la revendication 9, dans lequel l'identification comprend l'estimation d'un temps d'arrivée des groupements.

11. Procédé selon la revendication 9 ou 10, dans lequel le traitement comprend la création du signal complexe traité selon la relation suivante :

$$\bar{x}_{rx1} = x_{rx1} \times e^{-j \times arg(x_{rx2})}$$

où $\bar{x}_{rx1}$ est le signal complexe traité, $x_{rx1}$ est le premier signal complexe et $x_{rx2}$ est le second signal complexe.

12. Procédé selon la revendication 9 ou 10, dans lequel le traitement comprend la création du signal complexe traité selon la relation suivante :

$$\bar{x}_{rx2} = x_{rx2} \times e^{-j \times arg(x_{rx1})}$$

où $\bar{x}_{rx2}$ est le signal complexe traité, $x_{rx1}$ est le premier signal complexe et $x_{rx2}$ est le second signal complexe.

13. Procédé selon la revendication 9 ou 10, dans lequel le traitement comprend la création du signal complexe traité selon la relation suivante :

$$\bar{x}_{rx} = \frac{1}{2} \times \left( x_{rx1} \times e^{-j \times arg(x_{rx2})} + x_{rx2}{}^* \times e^{j \times arg(x_{rx1})} \right)$$

où $\bar{x}_{rx}$ est le signal complexe traité, $x_{rx1}$ est le premier signal complexe et $x_{rx2}{}^*$ est la conjuguée complexe du second signal complexe.

14. Procédé selon la revendication 9, 10, 11, 12 ou 13, dans lequel l'algorithme GRLT cohérent est déterminé selon la relation suivante :

$$\frac{\left| \frac{1}{N} \times \sum_{k=0}^{N-1} x_k \right|^2}{\frac{1}{N} \times \sum_{k=0}^{N-1} |x_k|^2} \underset{H1}{\overset{H0}{\lessgtr}} \sigma$$

où N est le nombre de signaux non périodique reçus, $x_k$ est le signal complexe traité, H0 est l'hypothèse NLOS, H1 est l'hypothèse LOS et $\sigma$ est un seuil prédéterminé.

15. Procédé selon la revendication 14, comprenant en outre le rejet d'un nombre prédéterminé de signaux complexes traités après l'application de l'algorithme GRLT.

16. Procédé selon les revendications 9, 10, 11, 12, 13, 14 et 15, comprenant en outre :

- l'application d'un algorithme d'ajustement de courbe aux signaux complexes traités, en générant de ce fait une courbe d'ajustement optimal définissant une variation de la composante de phase des signaux complexes traités au fil du temps,
- l'estimation des signaux complexes traités à compensation de phase à partir de la courbe d'ajustement optimal sur la base de la pluralité d'instants, et
- l'application du GRLT cohérent aux signaux complexes traités à compensation de phase.

FIG. 1

FIG. 2

FIG. 3

420 410

FIG. 4

time

510

520

530

FIG. 5

540

550

500

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **E. R. JATIVA ; J. VIDAL.** First arrival detection for positioning in mobile channels. *Proceedings of 13th IEEE International Symposium on Personal, Indoor and Mobile Radio Communications (PIMRC '02),* September 2002, vol. 4, 1540-1544

- **RIDHA HAMILA ; ABDELMONAEM LAKHZOURI.** A Highly Efficient Generalized Teager-Kaiser-Based Technique for LOS Estimation in WCDMA Mobile Positioning. *EURASIP Journal on Advances in Signal Processing,* 2005
- **J. BORRAS ; P. HATRACK ; N. B. MANDAYAM.** Decision theoretic framework for NLOS identification. *Proc. IEEE 48th Vehicular Technology Conf. (VTC'98 Spring),* 18 May 1998, vol. 2, 1583-1587